# EUROPEAN PATENT SPECIFICATION

(11) **EP 2 989 354 B1**
(45) Date of publication and mention of the grant of the patent: **22.03.2017**
(21) Application number: 14719718.0
(22) Date of filing: 22.04.2014
(51) Int. Cl.: F16J 13/00, B01F 9/04, B01F 15/00, F16J 15/02, F16J 15/06, B01F 9/00

(54) **APPARATUS WITH MAGNETIC SEAL**
VORRICHTUNG MIT MAGNETISCHER ABDICHTUNG
APPAREIL AVEC JOINT MAGNÉTIQUE

(30) Priority: 22.04.2013 EP 13164764
(43) Date of publication of application: 02.03.2016
(73) Proprietor: B.W. Soeteman B.V., 1398 AD Muiden (NL)
(72) Inventor: SOETEMAN, Bastiaan, NL-1398 Muiden (NL)
(74) Representative: Wolff, Felix
(86) International application number: PCT/EP2014/058128
(87) International publication number: WO 2014/173890

(56) References cited:
- EP-A1- 0 454 259
- DE-A1-102008 042 138
- DE-A1-102009 012 549
- DE-U1-202010 003 593
- GB-A- 1 553 569
- US-A- 4 474 478
- US-A- 4 940 337

## Description

The present invention relates to an apparatus for mixing products, with a shell having an opening, wherein a closing means is arranged on the opening and a seal is provided between the shell and the closing means.

Such apparatus are known from the state of the art, see e.g. EP 0 454 259 A1, especially as mixers or blenders.

They are particularly used for mixing food products or chemicals. For the addition or removal of products or for inspecting the mixing process as well as for cleaning and maintenance purposes, those apparatus usually comprise openings which are closed by doors, windows, etc. and locked during operation of the apparatus. In order to ensure a proper working of the apparatus even when mixing small products or fluids, the doors are sealed by means of a sealing mass. For a person skilled in the art, there is a constant desire to improve the hygiene of such apparatus and/or to avoid cross-contamination of products, particularly during batch production.

It was therefore the objective of the present invention to provide an apparatus that is suited for mixing food products or fine chemicals allowing for better hygiene conditions and/or improved anti-cross contamination conditions than apparatus known from the state of the art.

This objective is achieved with an apparatus for mixing products in accordance with claim 1, comprising a shell having an opening, wherein a closing means is arranged on or in the opening and a seal is provided between the shell and the closing means, wherein the seal is magnetic.

According to the present invention, the closing means preferably is a door and/or an inspection window and/or an inspection hatch. The shell preferably comprises one opening, but optionally the shell comprises any number of openings with any combination of closing means, e.g. an inspection window and a hatch or door. In particular, the shell comprises three openings with three corresponding doors or hatches.

Preferably, the closing means is partially or completely removable from the shell and/or tiltable and/or foldable. It is herewith advantageously possible to further facilitate the access to the shell and/or the seal.

According to the present invention, magnetic preferably means ferromagnetic or ferrimagnetic. In particular, magnetic is meant to comprise the meaning of magnetizable and/or magnetized.

It is advantageously possible with the apparatus according to the present invention to maintain a tight sealing when the closing means is closed, yet allowing for a removal of the seal for cleaning purposes, thus enhancing the hygienic operating conditions of the apparatus.

According to a preferred embodiment, the apparatus is a mixer or a blender and/or the shell is a drum.

According to a preferred embodiment, the shell is rotatable around an axis of rotation. More preferably, the shell rotates around one axis, but it is also conceivable that the shell rotates sequentially or simultaneously around multiple axes. Optionally, the shell effectuates a tumbling movement. Even more preferably, the shell is provided rotatably around a drive shaft.

According to the invention, the seal is arranged on the closing means and/or on the shell and/or in the opening. The seal is reversibly removable from the closing means and/or the shell and/or the opening. The is peelable off the closing means and/or the shell and/or the opening. Herewith, it is advantageously possible to easily detach and reattach the seal to the shell or the closing means, thus facilitating cleaning and/or disinfecting the apparatus. By providing the seal on the closing means, it is advantageously possible to provide for an easy access to the seal. Depending on the configuration and the size of the apparatus, it might otherwise be difficult to access the seal.

According to the invention, the magnetic forces between the seal and the shell are smaller or larger than the magnetic forces between the seal and the closing means. Preferably, at least in a region of the seal, the material of the closing means is more sensitive to magnetization than the material of the shell or vice versa.

More preferably, the contact surface area between the seal and the shell is smaller or larger than the contact surface area between the seal and the closing means. It is hence advantageously possible that even though in a closed state, the seal is magnetically connected to both the closing means and the shell, when opening the closing means, the seal stays attached rather to the one of both the shell and the closing means being more sensitive to magnetization. The person in the art understands that being more sensitive to magnetization means being more susceptible to magnetization, thus being more easily magnetized and/or being magnetized stronger, i.e. being more magnetic (than the other component).

Preferably, the products to be mixed (or being mixed) are food products and/or chemicals, in particular fine chemicals. Alternatively or additionally, the products are pharmaceuticals and/or liquids and/or ceramics and/or plastics and/or animal feed. The person skilled in the art acknowledges that those products can comprise any form, such as solid forms, powders, liquids, pastes, slurries, and/or any other form that products being mixed comprise. When dealing with such products, good hygiene conditions are particularly important. For example, when mixing fine chemicals, it is desirable to avoid cross-contamination of subsequently mixed chemicals due to small amounts of previous substances that are stuck on and/or under the seal.

According to a preferred embodiment, the seal is arranged at least partly circumferentially around the opening. It is herewith advantageously possible to provide a tight sealing for the opening. In particular, the seal forms a closed ring in and/or around the opening, in particular between the shell and the closing means. Alternatively, the seal is arranged overlappingly.

According to a preferred embodiment, the seal comprises a tube-like form. This means for example that the seal comprises a cross section in the form of an annulus, i.e. the seal comprises an outer diameter and an inner diameter, wherein the outer diameter is greater than the inner diameter, yielding a cavity in the seal. More preferably, the seal comprises a trapezoid cross section, even more particularly a cross section in the form of an isosceles trapezoid. It is herewith advantageously possible to provide a seal having different contact surface areas for the shell and the closing means, respectively. Alternatively, the seal comprises a rectangular cross section, in particular a square cross section, or a half-spherical cross section. It is herewith advantageously possible to provide flat contact surface areas at at least one side of the seal.

According to this embodiment of the invention, the seal is hollow. It is herewith advantageously possible to provide a tight sealing with a surface in contact with the closing means and/or the shell, which is large relative to its volume. Furthermore, it is herewith advantageously possible to provide for a hollow space in which a magnetic material can be placed.

Preferably, the seal is made of a flexible and/or elastic material, more preferably a plastic material, in particular silicone and/or polyurethane and/or polytetrafluoroethylene (also known under the trademark Teflon). Even more preferably, the seal is made of a foam material, in particular a rubber foam. By providing the seal as an elastic tube, it is possible to provide a better seal. Furthermore, an elastic material allows for a particularly tight sealing, even withstanding the inertia forces occurring when rotating the shell.

Preferably, the seal has an outer diameter between 1 mm and 10mm, in particular 6mm, and/or an inner diameter smaller than the outer diameter, in particular 4mm. A person skilled in the arts understands that the seal preferably has a constant diameter in order to allow for a tight sealing. Yet, more preferably, the diameter of the seal is varying according to the topography of regions of the shell and/or the closing means being in contact with the seal.

According to the invention, the shell and the closing means comprise an at least partially circumferential groove in which the seal is arranged. In particular, the seal is form- or force-fittingly arranged in the groove. In particular, the length of the groove is substantially equal to the length of the seal. Preferably, the groove comprises a cross section being substantially equal to the cross section of the seal, in particular of one half of the seal's cross section. It is herewith advantageously possible to facilitate the positioning of the seal and/or allow for a better sealing. More preferably, the groove comprises a cross section that is minimally smaller than that of the seal. It is thereby advantageously possible to improve the sealing, as the seal will be compressed by the groove in the contact regions. The person in the art acknowledges that no groove is necessary if the seal comprises a shape with a flat contact surface area.

According to this embodiment of the invention, the seal comprises a magnetic material, which is preferably separately arranged within the seal, in particular in the form of a wire and/or beads and/or cylinders and/or discs and/or extruded magnetic materials such as magnetic strips and/or sheets and/or in form of a magnetic layer applied on an inner surface of the seal. Alternatively, the magnetic material is already part of the outer seal material. For example, according to a further embodiment, a magnetic wire is woven into the elastic material. Optionally, an elastic material is provided around a magnetic strip by means of an injection molding process, wherein the elastic material preferably surrounds the magnetic strip at least partially, in particular completely.

Preferably, the magnetic material is fully surrounded by the elastic material; more preferably, the magnetic material is surrounded by the elastic material only on one side. It is herewith advantageously possible to provide a seal that is variable according to the respective working conditions or the respective embodiment of the shell and/or closing means. By providing a seal comprising a magnetic material, it is advantageously possible to realize a seal which allows for a tight sealing as well as an easy removal while at the same time being easily producible with established technologies.

According to a preferred embodiment, the magnetic material at least partially comprises neodymium. More preferably, the magnetic material is provided in the form of small neodymium magnet discs, in particular with a length of 2mm and a diameter of 3mm. According to this embodiment of the invention, the magnetic material is provided as groups of magnets that are arranged on strings, wherein adjacent strings of magnets are arranged such that their magnetization is opposite. It is herewith advantageously possible that two adjacent strings of magnets will push each other apart, such that they arrange themselves in the seal. Thus, a lower amount of magnets is needed. A person skilled in the art acknowledges that neodymium magnets usually consist of an alloy of neodymium, iron and boron in the form of Nd₂Fe₁₄B. It is herewith advantageously possible to provide a magnetic material with good magnetic properties, i.e. e.g. a strong magnetization, that is readily provided and can easily be inserted in e.g. a tube-like seal.

According to a preferred embodiment, the apparatus comprises a magnetic switch cooperating with the seal such that the shell is only rotatable when the closing means is closed and/or the seal is in contact both with the shell and the closing means. Alternatively, the magnetic switch is configured such as to prevent a start of the mixing process in case the closing means is at least partly opened and/or not fastened or locked and/or the seal is not in contact with the closing means and the shell.

According to a preferred embodiment, at least in the region of the seal, the shell and/or the closing means are made of steel. More preferably the shell is made of AISI 316L stainless steel and/or the closing means is made of stainless steel having the material number 1.4462. The person skilled in the art acknowledges that other magnetizable steels can be employed and that stainless steel with the material number 1.4462 is a mere example. It is herewith advantageously possible to provide strong materials for both the shell and the closing means being able to withstand even high forces during operation of the apparatus, while being hygienic and having different magnetic properties, i.e. in particular different magnetization properties.

According to an embodiment not part of the invention, the seal comprises an electromagnetic means which is preferably inductively activated and wherein preferably an activation means for activating the electromagnetic means is arranged at least partly circumferentially around the shell, in particular non-rotatably and/or stationary. It is herewith advantageously possible to easily detach the seal from the apparatus simply by switching off the activation means, thus rendering the seal substantially nonmagnetic. A person in the art understands that the activation means have to be provided in a way as to not hinder the operational rotation of the shell.

Another subject matter of the present invention is a method for accessing the inner volume of a shell of a apparatus according to the present invention, wherein the closing means is removed, wherein the seal stays magnetically attached to the closing means or the shell.

It is herewith advantageously possible to improve the hygiene conditions and/or the anti-cross contamination conditions of such an inventive apparatus by allowing for a simple yet easy removal of a closing means and the seal.

A further subject matter of the present invention is an apparatus for mixing products in accordance with claim 11, comprising a shell having an opening, wherein a closing means is arranged on or in the opening and a seal is provided between the shell and the closing means, wherein the seal comprises a magnetizable material and the shell and/or the closing means comprises a magnetic material at least in a region of the seal.

The person skilled in the art understands that the same benefits as with the firstly described apparatus can be achieved and that all of the above described embodiments can be employed to this apparatus as well with appropriate amendments.

Still a further subject matter of the present invention is a method for the, in particular magnetic and/or mechanical, removal of metallic components of a mixing product with an apparatus according to the present invention.

It is advantageously possible with an apparatus and a method according to the present invention that metallic components, which may originate from the production process of the mixing products, are automatically sorted out during operation, as they magnetically adhere to the inner surface of the shell in the region where the seal is located. After the mixing process, in particular after removing the mixing products, those metallic components can be removed easily, e.g. manually. This represents a major advantage as until now, separate metal filtering or separating means have to be employed.

The invention is now explained with reference Fig. 1 to 9. These explanations do not limit the scope of protection.
**Figure 1** shows a schematic view of an apparatus according to the present invention.
**Figure 2** shows a schematic cross-sectional view of the apparatus according to the present invention along the lines C - C of **Figure 1****.**
**Figure 3** shows a perspective view of an apparatus according to a first embodiment of the present invention.
**Figure 4** shows a perspective view of the apparatus according to the first embodiment of the present invention shown in **Figure 3** in a different perspective.
**Figure 5** shows a schematic top view of a closing means according to a second embodiment of the present invention.
**Figure 6** shows a schematic cross-sectional view of the closing means according to the second embodiment of the present invention along the lines B - B of **Figure 5****.**
**Figure 7** shows a schematic view of a seal according to a third embodiment of the present invention.
**Figure 8** shows a schematic cross-sectional view of a constructional detail of an apparatus according to an exemplary embodiment of the present invention.
**Figure 9** shows a schematic top view of a seal according to a fourth embodiment of the present invention.

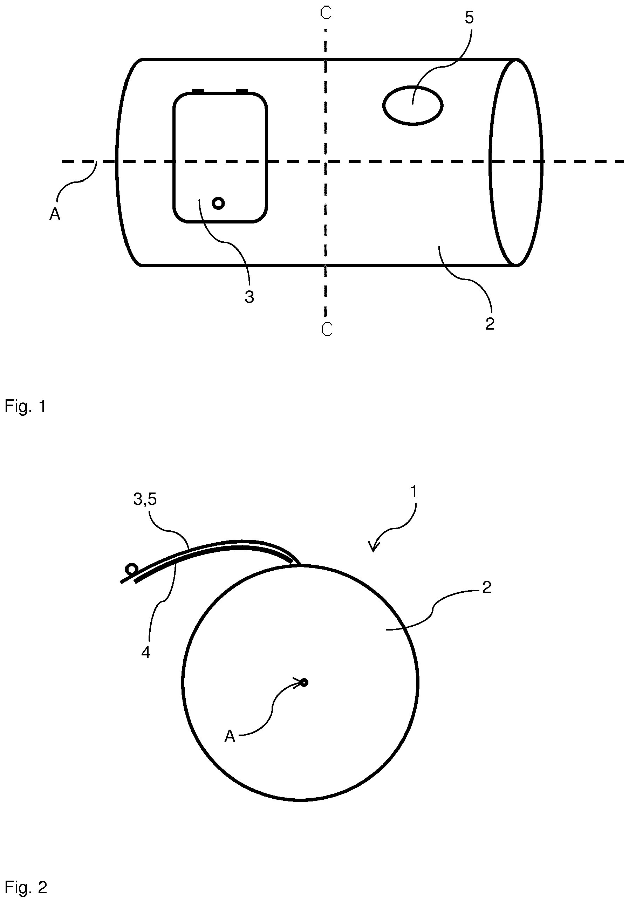

In **Figure 1****,** a schematic view of a apparatus 1 according to the present invention is shown. In this case, the apparatus is a mixer. For reasons of simplicity, only a shell 2 and closing means 3,5 are shown. The shell 2, here a drum 2, comprises a generally cylindrical shape, although other forms and/or shapes are conceivable. In particular, for mixing purposes, a barrel-like shape, optionally with convex end-sections, is suitable and/or advantageous. The shell 2 is made of steel, in particular of AISI 316L stainless steel. The apparatus 1 comprises a driven shaft along an axis A around which the shell 2 is rotatable. In the mantle of the shell 2, at least one opening is provided, which has to be closed and remain shut during operation. This is achieved by arranging closing means 3,5 on the openings and fastening those closing means 3,5 to the shell 2. Such a closing means 3,5 is a door 3, a hatch or an inspection window 5. In the illustrated embodiment, the apparatus comprises a door 3, being lockable with a fastening means, which is only indicated in the illustration, and being tiltable along an axis e.g. by means of hinges, which are illustrated only schematically. The door 3 will generally have a form according to the mantle of the shell 2. Additionally, the apparatus 1 according to the illustrated embodiment comprises an inspection window 5, which will usually stay fastened, but may be completely removed for maintenance or cleaning purposes. The apparatus 1 is used for mixing food products and/or fine chemicals, which requires a high level of hygiene. The door 3 is preferably made of steel, in particular stainless steel having the material number 1.4462. This sort of steel is more sensitive to magnetization than the material of the shell 2. Optionally, the steels for the shell 2 and the door 3 are chosen such that the material of the shell 2 is more sensitive to magnetization than the material of the door 3, or both the shell 2 and the closing means 3,5 are built from the same material.

In **Figure 2****,** a schematic cross-sectional view of the apparatus 1 according to the present invention along the lines C - C of **Figure 1** is shown. As can be seen, a seal 4 is provided between the shell 2 and the closing means 3,5, here the door 3. In the illustrated embodiment, the seal 4 is arranged on the door 3. In the operational state, i.e. the door 3 is closed and fastened, the seal 4 contacts both the shell 2 and the door 3, thus sealing the opening so that none of the products that are being mixed can exit the shell 2. To realize a tight sealing, the seal 4 is provided as an elastic, hollow tube; though other seals are conceivable. This means that when the door 3 is closed, the seal 4 will be deformed elastically, thus realizing an at least partly flat contact surface on the door 3 and the shell 2. The seal 4 is magnetic. Hence, when brought in contact with the door 3 and/or the shell 2, it will magnetically adhere thereto. A person skilled in the art acknowledges that for that purpose, it is not necessary that the entire shell 2 and/or the entire door 3 are made of a magnetizable material, e.g. the sorts of steel mentioned above in reference to **Figure 1****,** but it is sufficient if the shell 2 and/or the door 3 consist of a magnetizable material only in the regions where a contact with the seal is intended. Thus, in operation, the seal adheres to the door 3 and the shell 2. As the materials of the door 3 and the shell 2 comprise different sensitivities to magnetization, when the door 3 is opened, the seal 4 will stay adhered to it and will be detached from the shell 2 automatically. In the case that the apparatus 1 needs to be cleaned, the seal 4 can easily, in particular manually, be detached from the door 3 as well. Now, the door 3 and the shell 2 as well as the seal 4 can be cleaned and/or maintained separately, allowing e.g. for the removal of mixing products that got stuck on or under the seal 4 to avoid contamination of subsequent mixing cycles. Additionally or alternatively, the seal 4 comprises a shape having an asymmetric cross section, thus providing different contact surface areas between the seal 4 and the shell 2 and between the seal 4 and the door 3. For example, the seal has a cross section in the form of a trapezoid, in which case the contact surface areas are of different sizes.

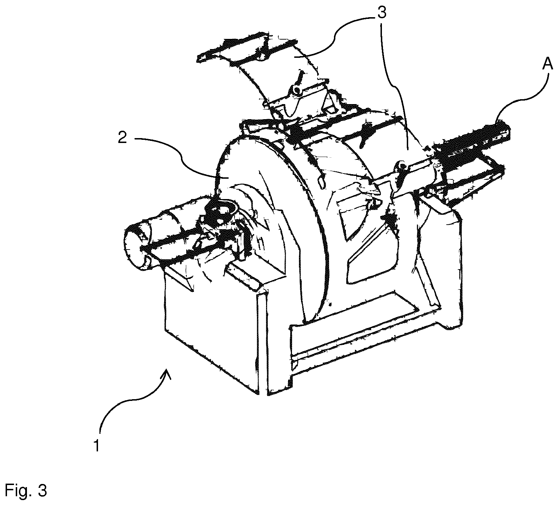

In **Figure 3****,** a perspective view of an apparatus 1 according to a first embodiment of the present invention is shown. In principle, the illustrated first embodiment corresponds to the embodiment described with reference to **Figures 1 and 2****.** The shaft arranged on the axis A is illustrated as well as a bearing support of the apparatus 1, which supports the shaft and therefore the shell 2. According to the first embodiment, the shell 2 does not comprise an inspection window 5, but instead comprises two doors 3.

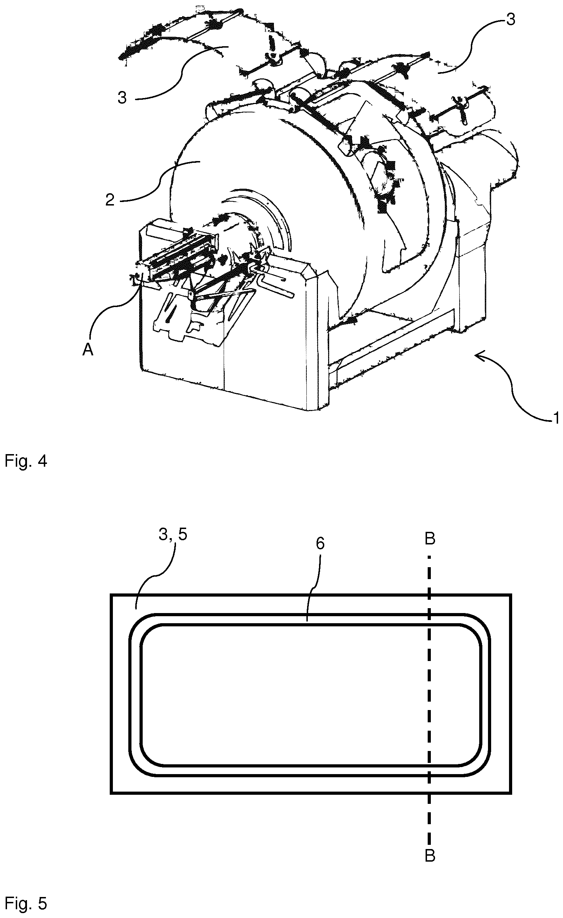

In **Figure 4****,** a perspective view of the apparatus 1 according to the first embodiment of the present invention shown in **Figure 3** in a different perspective is shown. All statements made with reference to **Figure 3** account for **Figure 4** as well.

In **Figure 5****,** a schematic top view of a closing means 3,5 according to a second embodiment of the present invention is shown. For reasons of simplicity, the illustration corresponds to a projection on an even surface, i.e. the illustrated door 3 will in fact comprise a curvature according to the radius of the shell 2. The door 3 comprises a groove 6, in which the seal 4 is arranged. This simplifies the correct positioning of the seal 4, enhancing the sealing. Optionally, but not falling under the scope of the invention, the door comprises only indication means for a correct positioning of the seal, e.g. markings such as a line.

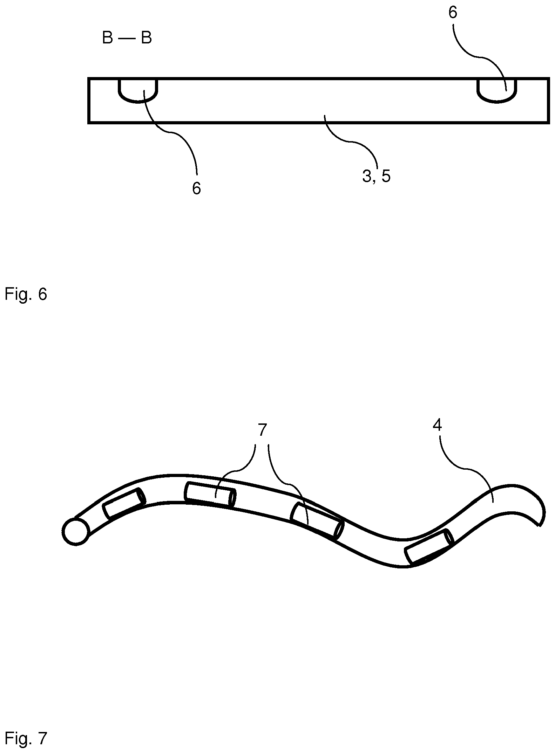

In **Figure 6****,** a schematic cross-sectional view of the closing means 3,5 according to the second embodiment of the present invention along the lines B - B of **Figure 5** is shown. The groove 6 is a depression in which the seal 4 can form-fittingly be placed. For example, if the seal 4 is provided as a tube having a generally annular cross section, the groove 6 preferably has a cross section in the form of a semicircle having the same radius as the seal 3. Alternatively, the groove 6 is realized only as a slight depression in the surface of the door 3, in particular as a circular segment having a larger radius than the radius of the seal 4. A person skilled in the art understands that additionally or alternatively, the shell 2 may comprise such a groove 6 as well or that neither the shell 2 nor the closing means 3,5 may comprise a groove.

In **Figure 7****,** a schematic view of a seal 4 according to an embodiment of the present invention is shown. The seal 4 is an elastic, hollow tube, made e.g. of silicone. Small cylindrical magnets 7, e.g. neodymium magnets 7, are arranged within the seal 4, in particular equidistantly. Alternatively, the magnetic material is provided in form of a wire or beads or a magnetic coating of the inner or outer surface of the seal 4. A person skilled in the art readily conceives a multitude of different realizations, all of which are suitable for the seal according to the present invention. In particular, the same inventive concept applies to a similar apparatus, wherein the shell 2 and/or the closing means 3,5 comprise a magnetic material, e.g. in the region of the seal 4, and the seal 4 comprises a magnetizable material, e.g. steel.

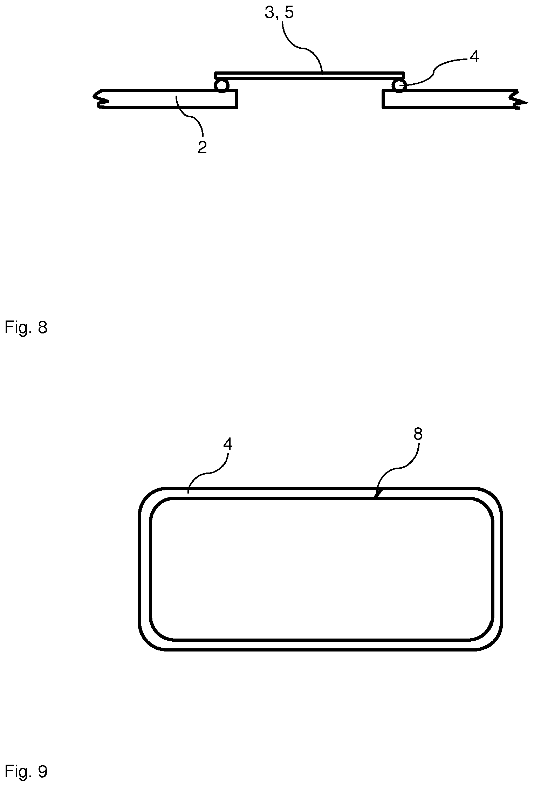

In **Figure 8****,** a schematic cross-sectional view of a constructional detail of a apparatus 1 according to an exemplary embodiment of the present invention is shown. The seal 4 is circumferentially arranged around the opening between the door 3 and the shell 2 such that it contacts both.

In **Figure 9****,** a schematic top view of a seal 4 according to a fourth embodiment of the present invention is shown. The seal 4 is arranged such that it fits in the groove 6 shown in **Figures 5** **and** **6****.** The seal 4 is produced as an elongate seal. Subsequently, the length is chosen according to the length of the groove 6 and the resulting end pieces of the seal 4 are preferably connected at a connecting point 8, e.g. by means of a welded connection or an adhesive. Thus, a tight sealing is realized. Alternatively, the length of the seal 4 is chosen such that an overlap is realized when arranged around the opening.

### List of reference signs:

- 1: - apparatus
- 2: - shell
- 3: - door
- 4: - seal
- 5: - window
- 6: - groove
- 7: - magnet
- 8: - connecting point

- A: - axis of rotation

## Claims

1. Apparatus (1) for mixing products, comprising a shell (2) having an opening, wherein a closing means (3,5) is arranged on the opening and a seal (4) is provided between the shell (2) and the closing means (3,5), **characterized in that** the seal (4) is magnetic, wherein the seal (4) is hollow and comprises a magnetic material (7), wherein the magnetic material (7) is provided as groups of magnets that are arranged on strings, wherein adjacent strings of magnets are arranged such that their magnetization is opposite, wherein the seal (4) is reversibly removable from the closing means (3,5) and the shell (2), wherein at least in the region of the seal (4), the shell (2) and the closing means (3,5) are made of steel, wherein the magnetic forces between the seal (4) and the shell (2) are smaller or larger than the magnetic forces between the seal (4) and the closing means (3,5), wherein the shell (2) and the closing means (3,5) comprise an at least partially circumferential groove (6) in which the seal (4) is arranged.

2. Apparatus (1) according to claim 1, **characterized in that** the shell (2) is rotatable around an axis of rotation (A).

3. Apparatus (1) according to any one of the preceding claims, **characterized in that** the seal (4) is arranged on the closing means (3,5) and/or on the shell (2) and/or in the opening.

4. Apparatus (1) according to any one of the preceding claims, **characterized in that** at least in a region of the seal (4) the material of the closing means (3,5) is more sensitive to magnetization than the material of the shell (2) or vice versa and/or the contact surface area between the seal (4) and the shell (2) is smaller or larger than the contact surface area between the seal (4) and the closing means (3.5).

5. Apparatus (1) according to any one of the preceding claims, **characterized in that** the groove (6) comprises a cross section being substantially equal to the cross section of the seal (4), in particular of one half of the seal's cross section.

6. Apparatus (1) according to any one of the preceding claims, **characterized in that** the seal (4) is arranged at least partly circumferentially or overlappingly around the opening.

7. Apparatus (1) according to any one of the preceding claims, **characterized in that** the seal (4) comprises a trapezoid cross section, preferably a cross section in the form of an Isosceles trapezoid.

8. Apparatus (1) according to any one of the preceding claims, **characterized in that** the seal (4) is made of a flexible and/or elastic material, in particular a plastic material, preferably silicone and/or polyurethane and/or polytetrafluoroethylene and/or a foam material, in particular a rubber foam.

9. Apparatus (1) according to any one of the preceding claims, **characterized in that** the apparatus (1) comprises a magnetic switch cooperating with the seal (4) such that the shell (2) is only rotatable when the closing means (3,5) is closed and/or the seal (4) is in contact both with the shell (2) and the closing means (3,5).

10. Apparatus (1) according to any one of the preceding claims, **characterized in that** at least in the region of the seal (4), the shell (2) is made of AISI 316L stainless steel, and the closing means (3,5) is made of stainless steel having the material number 1.4462.

11. Apparatus (1) for mixing products, comprising a shell (2) having an opening, wherein a closing means (3, 5) is arranged on the opening and a seal (4) is provided between the shell (2) and the closing means (3, 5), **characterized in that** the seal (4) comprises a magnetizable material and the shell (2) and the closing means (3, 5) comprises a magnetic material at least in a region of the seal (4), wherein the seal (4) Is reversibly removable from the closing means (3,5) and the shell (2), wherein the magnetic forces between the seal (4) and the shell (2) are smaller or larger than the magnetic forces between the seal (4) and the closing means (3,5), wherein the shell (2) and the closing means (3,5) comprise an at least partially circumferential groove (6) in which the seal (4) is arranged.

12. Method for accessing the inner volume of a shell (2) of a apparatus (1) according to any one of the preceding claims, wherein the closing means (3,5) is removed, **characterized in that** the seal (4) stays magnetically attached to the closing means (3,5) or the shell (2).

13. Method for the magnetic and mechanical removal of metallic components of a mixing product with an apparatus according to any one of the preceding claims.

## Patentansprüche

1. Vorrichtung (1) zum Mischen von Produkten, die einen Mantel (2) umfasst, der eine Öffnung aufweist, wobei ein Verschlussmittel (3, 5) auf der Öffnung angeordnet ist und eine Dichtung (4) zwischen dem Mantel (2) und dem Verschlussmittel (3, 5) bereitgestellt ist, **dadurch gekennzeichnet, dass** die Dichtung (4) magnetisch ist, wobei die Dichtung (4) hohl ist und ein magnetisches Material (7) enthält, wobei das magnetische Material (7) als Gruppen von Magneten bereitgestellt ist, die in Reihen angeordnet sind, wobei benachbarte Reihen von Magneten so angeordnet sind, dass ihre Magnetisierung entgegengesetzt ist, wobei die Dichtung (4) umkehrbar von dem Verschlussmittel (3, 5) und dem Mantel (2) abgenommen werden kann, wobei mindestens in der Region der Dichtung (4) der Mantel (2) und das Verschlussmittel (3, 5) aus Stahl bestehen, wobei die magnetischen Kräfte zwischen der Dichtung (4) und dem Mantel (2) kleiner oder größer sind als die magnetischen Kräfte zwischen der Dichtung (4) und dem Verschlussmittel (3, 5), wobei der Mantel (2) und das Verschlussmittel (3, 5) eine mindestens teilweise umfänglich verlaufende Nut (6) umfassen, in der die Dichtung (4) angeordnet ist.

2. Vorrichtung (1) nach Anspruch 1, **dadurch gekennzeichnet, dass** der Mantel (2) um eine Drehachse (A) drehbar ist.

3. Vorrichtung (1) nach einem der vorangehenden Ansprüche, **dadurch gekennzeichnet, dass** die Dichtung (4) auf dem Verschlussmittel (3, 5) und/oder auf dem Mantel (2) und/oder in der Öffnung angeordnet ist.

4. Vorrichtung (1) nach einem der vorangehenden Ansprüche, **dadurch gekennzeichnet, dass** mindestens in einer Region der Dichtung (4) das Material des Verschlussmittels (3, 5) für eine Magnetisierung empfindlicher ist als das Material des Mantels (2) oder umgekehrt, und/oder die Kontaktoberfläche zwischen der Dichtung (4) und dem Mantel (2) kleiner oder größer ist als die Kontaktoberfläche zwischen der Dichtung (4) und dem Verschlussmittel (3, 5).

5. Vorrichtung (1) nach einem der vorangehenden Ansprüche, **dadurch gekennzeichnet, dass** die Nut (6) einen Querschnitt umfasst, der im Wesentlichen gleich dem Querschnitt der Dichtung (4) ist, insbesondere die Hälfte des Querschnitts der Dichtung.

6. Vorrichtung (1) nach einem der vorangehenden Ansprüche, **dadurch gekennzeichnet, dass** die Dichtung (4) mindestens teilweise umfänglich oder überlappend um die Öffnung herum angeordnet ist.

7. Vorrichtung (1) nach einem der vorangehenden Ansprüche, **dadurch gekennzeichnet, dass** die Dichtung (4) einen trapezförmigen Querschnitt umfasst, bevorzugt einen Querschnitt in Form eines gleichschenkligen Trapezoids.

8. Vorrichtung (1) nach einem der vorangehenden Ansprüche, **dadurch gekennzeichnet, dass** die Dichtung (4) aus einem flexiblen und/oder elastischen Material besteht, insbesondere einem Kunststoffmaterial, bevorzugt Silikon und/oder Polyurethan und/oder Polytetrafluorethylen und/oder einem Schaumstoffmaterial, insbesondere einem Gummischaumstoff.

9. Vorrichtung (1) nach einem der vorangehenden Ansprüche, **dadurch gekennzeichnet, dass** die Vorrichtung (1) einen Magnetschalter umfasst, der mit der Dichtung (4) zusammenwirkt, dergestalt, dass der Mantel (2) nur dann drehbar ist, wenn das Verschlussmittel (3, 5) geschlossen ist und/oder die Dichtung (4) in Kontakt sowohl mit dem Mantel (2) als auch mit dem Verschlussmittel (3, 5) steht.

10. Vorrichtung (1) nach einem der vorangehenden Ansprüche, **dadurch gekennzeichnet, dass** mindestens in der Region der Dichtung (4) der Mantel (2) aus Edelstahl AISI 316L besteht und das Verschlussmittel (3, 5) aus Edelstahl mit der Materialnummer 1.4462 besteht.

11. Vorrichtung (1) zum Mischen von Produkten, die einen Mantel (2) umfasst, der eine Öffnung aufweist, wobei ein Verschlussmittel (3, 5) auf der Öffnung angeordnet ist und eine Dichtung (4) zwischen dem Mantel (2) und dem Verschlussmittel (3, 5) bereitgestellt ist, **dadurch gekennzeichnet, dass** die Dichtung (4) einen magnetisierbares Material umfasst und der Mantel (2) und das Verschlussmittel (3, 5) ein magnetisches Material mindestens in einer Region der Dichtung (4) umfassen, wobei die Dichtung (4) umkehrbar von dem Verschlussmittel (3, 5) und dem Mantel (2) abgenommen werden kann, wobei die magnetischen Kräfte zwischen der Dichtung (4) und dem Mantel (2) kleiner oder größer sind als die magnetischen Kräfte zwischen der Dichtung (4) und dem Verschlussmittel (3, 5), wobei der Mantel (2) und das Verschlussmittel (3, 5) eine mindestens teilweise umfänglich verlaufende Nut (6) umfassen, in der die Dichtung (4) angeordnet ist.

12. Verfahren zum Zugreifen auf das innere Volumen eines Mantels (2) einer Vorrichtung (1) nach einem der vorangehenden Ansprüche, wobei das Verschlussmittel (3, 5) abgenommen wird, **dadurch gekennzeichnet, dass** die Dichtung (4) magnetisch an dem Verschlussmittel (3, 5) oder dem Mantel (2) haften bleibt.

13. Verfahren für das magnetische und mechanische Entfernen metallischer Komponenten aus einem Mischprodukt mit einer Vorrichtung nach einem der vorangehenden Ansprüche.

## Revendications

1. Appareil (1) destiné à mélanger des produits, comprenant une coque (2) présentant une ouverture, dans lequel un moyen de fermeture (3, 5) est placé sur l'ouverture et un joint (4) est mis en place entre la coque (2) et le moyen de fermeture (3, 5), **caractérisé en ce que** le joint (4) est magnétique, dans lequel le joint (4) est creux et comporte un matériau magnétique (7), dans lequel le matériau magnétique (7) se présente sous la forme de groupes d'aimants qui sont placés sur des chaînes, dans lequel des chaînes d'aimants voisines sont agencées de manière que leur aimantation soit opposée, dans lequel le joint (4) peut être retiré de manière réversible du moyen de fermeture (3, 5) et de la coque (2), dans lequel, au moins dans la région du joint (4), la coque (2) et le moyen de fermeture (3, 5) sont constitués d'acier, dans lequel les forces magnétiques entre le joint (4) et la coque (2) sont inférieures ou supérieures aux forces magnétiques entre le joint (4) et le moyen de fermeture (3, 5), dans lequel la coque (2) et le moyen de fermeture (3, 5) comportent une rainure au moins en partie périphérique (6), dans laquelle est placé joint (4).

2. Appareil (1) selon la revendication 1, **caractérisé en ce que** la coque (2) peut tourner autour d'un axe de rotation (A).

3. Appareil (1) selon l'une quelconque des revendications précédentes, **caractérisé en ce que** le joint (4) est placé sur le moyen de fermeture (3, 5) et/ou sur la coque (2) et/ou dans l'ouverture.

4. Appareil (1) selon l'une quelconque des revendications précédentes, **caractérisé en ce qu'**au moins dans une région du joint (4), le matériau du moyen de fermeture (3, 5) est plus sensible à une aimantation que le matériau de la coque (2) ou vice versa et/ou l'aire de la surface de contact entre le joint (4) et la coque (2) est inférieure ou supérieure à l'aire de la surface de contact entre le joint (4) et le moyen de fermeture (3, 5).

5. Appareil (1) selon l'une quelconque des revendications précédentes, **caractérisé en ce que** la rainure (6) présente une section transversale qui est sensiblement égale à la section transversale du joint (4), en particulier égale à la moitié de la section transversale du joint.

6. Appareil (1) selon l'une quelconque des revendications précédentes, **caractérisé en ce que** le joint (4) est placé au moins en partie à la périphérie de l'ouverture ou de manière à recouvrir celle-ci au moins en partie.

7. Appareil (1) selon l'une quelconque des revendications précédentes, **caractérisé en ce que** le joint (4) présente une section transversale trapézoïdale, de préférence une section transversale ayant la forme d'un trapèze isocèle.

8. Appareil (1) selon l'une quelconque des revendications précédentes, **caractérisé en ce que** le joint (4) est constitué d'un matériau souple et/ou élastique, en particulier, d'une matière plastique, de préférence, une silicone et/ou un polyuréthane et/ou un polytétrafluoroéthylène et/ou une mousse, en particulier, un caoutchouc mousse.

9. Appareil (1) selon l'une quelconque des revendications précédentes, **caractérisé en ce que** l'appareil (1) comprend un commutateur magnétique coopérant avec le joint (4), de manière que la coque (2) ne puisse tourner que lorsque le moyen de fermeture (3, 5) est fermé et/ou que le joint (4) est au contact à la fois de la coque (2) et du moyen de fermeture (3, 5).

10. Appareil (1) selon l'une quelconque des revendications précédentes, **caractérisé en ce qu'**au moins dans la région du joint (4), la coque (2) est constituée d'acier inoxydable AISI 316L, et le moyen de fermeture (3, 5) est constitué d'acier inoxydable ayant le numéro de matériau 1.4462.

11. Appareil (1) destiné à mélanger des produits, comprenant une coque (2) présentant une ouverture, dans lequel un moyen de fermeture (3, 5) est placé sur l'ouverture et un joint (4) est mis en place entre la coque (2) et le moyen de fermeture (3, 5), **caractérisé en ce que** le joint (4) comprend un matériau pouvant être aimanté, et la coque (2) et le moyen de fermeture (3, 5) comprend un matériau magnétique au moins dans une région du joint (4), dans lequel le joint (4) peut être retiré de manière réversible du moyen de fermeture (3, 5) et de la coque (2), dans lequel les forces magnétiques entre le joint (4) et la coque (2) sont inférieures ou supérieures aux forces magnétiques entre le joint (4) et le moyen de fermeture (3, 5), dans lequel la coque (2) et le moyen de fermeture (3, 5) comportent une rainure au moins en partie périphérique (6), dans laquelle est placé joint (4).

12. Procédé pour accéder au volume intérieur d'une coque (2) d'appareil (1) selon l'une quelconque des revendications précédentes, dans lequel le moyen de fermeture (3, 5) a été retiré, **caractérisé en ce que** le joint (4) reste magnétiquement fixé au moyen de fermeture (3, 5) ou à la coque (2).

13. Procédé pour l'élimination magnétique et mécanique de composants métalliques d'un produit de mélange à l'aide d'un appareil selon l'une quelconque des revendications précédentes.
